# EUROPÄISCHE PATENTSCHRIFT

(11) **EP 3 871 956 B1**
(45) Veröffentlichungstag und Bekanntmachung des Hinweises auf die Patenterteilung: **11.01.2023**
(21) Anmeldenummer: 20205619.8
(22) Anmeldetag: 04.11.2020
(51) Int. Cl.: B62D 55/108, B62D 55/084

(54) **RAUPENLAUFWERK**
CATERPILLAR TRACK
TRAIN DE ROULEMENT À CHENILLES

(30) Priorität: 27.02.2020 DE 102020105136
(43) Veröffentlichungstag der Anmeldung: 01.09.2021
(73) Patentinhaber: CLAAS Industrietechnik GmbH, 33106 Paderborn (DE)
(72) Erfinder: Weingärtner, Felix, 32052 Herford (DE); Wagemann, Sebasdtian, 59302 Oelde-Sünninghausen (DE); Rackow, Sascha, 33098 Paderborn (DE)
(74) Vertreter: CLAAS Gruppe

(56) Entgegenhaltungen:
- WO-A1-2006/018215
- DE-U1- 20 000 737

## Beschreibung

Die Erfindung betrifft ein Raupenlaufwerk einer landwirtschaftlichen Arbeitsmaschine gemäß dem Oberbegriff des Anspruchs 1.

Landwirtschaftliche Arbeitsmaschinen, wie beispielsweise Traktoren oder selbstfahrende Erntemaschinen, werden zunehmend mit Raupenlaufwerken ausgestattet, welche eine bessere Übertragung von Zugkräften auf den Untergrund ermöglichen, sodass die Arbeitsmaschinen leichter durch raue oder schlammige Felder bewegt werden können. Raupenlaufwerke besitzen eine hohe Aufstandsfläche, welche beispielsweise ein Raupenband aus einem elastischen Werkstoff wie Gummi aufweisen. Das Raupenlaufwerk umfasst dabei üblicherweise ein Raupenschiff, an welchem das Triebrad zum beispielsweise kraftschlüssigen Antrieb des Raupenbandes, vordere und hintere Umlenkrollen sowie zwischen diesen befindliche Mittelrollen angeordnet sind.

Dabei werden die Umlenkrollen und die Mittelrollen in der Praxis mittels einer Vielzahl von schwenkbaren Elementen angeordnet, die einen komplexen Aufbau und eine Vielzahl von Feder- und Dämpferelementen erfordern, um einen komfortablen Betrieb des Raupenlaufwerks auch bei einer Fahrt über einen unebenen Untergrund zu erreichen.

Ein derartiges Raupenlaufwerk für eine landwirtschaftliche Arbeitsmaschine mit einem Raupenband ist aus der EP2727803A2 bekannt. Bei dieser sind die vordere Umlenkrolle und die vordere Mittelrolle an einer vorderen Wippenanordnung aufgehängt, die über eine erste Aufhängungsfederanordnung an einem Jochplattenträger gelagert ist. Die hintere Umlenkrolle und die hintere Mittelrolle sind an einer hinteren Wippenanordnung aufgehängt, die über eine zweite Aufhängungsfederanordnung ebenfalls an dem Jochplattenträger gelagert ist.

Ferner offenbart WO 2006/018215 A1 ein Raupenlaufwerk gemäß der Präambel des unabhängigen Anspruchs 1.

Es ist deshalb Aufgabe der Erfindung, die beschriebenen Nachteile des Standes der Technik zu vermeiden und insbesondere den Aufbau eines Raupenlaufwerks derart zu vereinfachen, sodass dieser mittels weniger Feder- und Dämpferelemente einen komfortablen Betrieb des Raupenlaufwerks ermöglicht.

Diese Aufgabe wird bei einem Raupenlaufwerk nach dem Oberbegriff des Anspruchs 1 durch die Merkmale des kennzeichnenden Teils von Anspruch 1 gelöst.

Gemäß dem Anspruch 1 wird ein Raupenlaufwerk einer landwirtschaftlichen Arbeitsmaschine vorgeschlagen. Das vorschlagsgemäße Raupenlaufwerk umfasst ein Triebrad, eine vordere Umlenkrolle und eine hintere Umlenkrolle, ein um das Triebrad und die Umlenkrollen angeordnetes endloses Raupenband und eine Mehrzahl von zwischen der vorderen und hinteren Umlenkrolle befindlichen Mittelrollen. Erfindungsgemäß ist vorgesehen, dass das Raupenlaufwerk einen Raupenrahmen und einen Schwenkrahmen aufweist, wobei das Raupenlaufwerk mittels des Schwenkrahmens um eine erste Achse schwenkbeweglich an der landwirtschaftlichen Arbeitsmaschine angeordnet ist und der Raupenrahmen schwenkbeweglich um eine zweite Achse an dem Schwenkrahmen angeordnet ist, wobei die zweite Achse beabstandet zur ersten Achse ist und zumindest ein Federsystem und/oder ein Dämpfersystem zwischen dem Raupenrahmen und dem Schwenkrahmen angeordnet ist, wobei die Umlenkrollen an dem Raupenrahmen angeordnet sind, wobei die Mittelrollen an einem gemeinsamen Trägerelement angeordnet sind, wobei das gemeinsame Trägerelement an dem Raupenrahmen angeordnet ist.

Die Erfindung hat viele Vorteile. Die abzustützende Last der landwirtschaftlichen Arbeitsmaschine wird zunächst in den gegenüber dem Schwenkrahmen drehbar gelagerten Raupenrahmen eingeleitet. Dieser Raupenrahmen wird wiederum gegen ein Verdrehen gegenüber dem Schwenkrahmen mittels des Feder- und/oder Dämpfersystems abgestützt. Sämtliche Rollen des Raupenlaufwerks, welche das Raupenlaufwerk und somit die landwirtschaftliche Arbeitsmaschine gegenüber dem Untergrund abstützen, sind dem Raupenrahmen zugeordnet. Dementsprechend sind auf Grund des schwenkbeweglichen Aufbaus des Raupenrahmens gegenüber dem Schwenkrahmen sowie des unmittelbar zwischen diesen angeordneten Federsystems und/oder Dämpfersystems sämtliche Rollen, mit denen das Raupenlaufwerk gegenüber dem Untergrund abgestützt wird, mittels eines Feder- und/oder Dämpfersystem gefedert bzw. gedämpft. Hierdurch ist der Aufbau des erfindungsgemäßen Raupenlaufwerks gegenüber einem komplexen System mit einer Vielzahl federnder und/oder dämpfender Elemente kostengünstig und weniger wartungsintensiv.

In einer vorteilhaften Weiterbildung ist vorgesehen, dass das Trägerelement schwenkbeweglich um eine dritte Achse an dem Raupenrahmen angeordnet ist. Eine schwenkbewegliche Anordnung des Trägerelements, an welchem die Mittelrollen angeordnet sind, sorgt für zusätzlichen Fahrkomfort. Kräfte, die auf eine der Mittelrollen wirken, werden über das Trägerelement auf sich gegensinnig zu dieser Mittelrolle gegenüber dem Untergrund bewegender Mittelrollen übertragen, wobei diese die Kraft zumindest anteilig über das Raupenband an den Untergrund zurückführt. Die Elastizität des Raupenbands sowie des Untergrunds wirken hierbei als Dämpfer.

In einer vorteilhaften Weiterbildung ist vorgesehen, dass die vordere Umlenkrolle und/oder die hintere Umlenkrolle mittels einer Spanneinrichtung zur Spannung des Raupenbandes an dem Raupenrahmen angeordnet ist. Hierdurch kann das Raupenband zwischen den Umlenkrollen und dem Triebrad verspannt werden.

In einer vorteilhaften Ausgestaltung können zwei Mittelrollen an dem Trägerelement angeordnet sein, wobei eine der Mittelrollen in einem sich ausgehend von der dritten Achse in Vorwärtsfahrtrichtung befindlichen Bereich des Trägerelements und die weitere Mittelrolle ausgehend von der dritten Achse in einem sich entgegengesetzt zur Vorwärtsfahrtrichtung befindlichen Bereich an dem Trägerelement angeordnet ist.

Auf Grund dieser Anordnung weisen die Mittelrollen, welche das Raupenband gegenüber dem Untergrund abstützen, eine gegensinnige Bewegungsrichtung gegenüber dem Untergrund auf. Dies ist besonders vorteilhaft für die bereits oben beschriebene anteilige Rückführung von Kräften, die auf eine der beiden Rollen wirken und mittels der weiteren Rolle zurück auf den Untergrund wirkt.

In einer vorteilhaften Weiterbildung kann das Raupenlaufwerk zwei Trägerelemente mit jeweils zwei Mittelrollen aufweisen, wobei die zwei Trägerelemente einander gegenüberliegend an dem Raupenrahmen fest und drehbeweglich um die dritte Achse angeordnet sind. Hierdurch kann ein besonders großer Bereich des Raupenbandes gegenüber dem Untergrund mittels der Mittelrollen abgestützt werden.

Eine weitere vorteilhafte Ausgestaltung sieht vor, dass die zwei Trägerelemente entkoppelt voneinander schwenkbeweglich um die dritte Achse angeordnet sind. Dementsprechend können die Trägerelemente unabhängig voneinander um die dritte Achse schwingen, sodass mechanische Spannungen zwischen selbigen vermieden werden.

In einer vorteilhaften Ausgestaltung können die Mittelrollen paarweise angeordnet sein, wobei die jeweiligen Mittelrollen eines Paares an sich gegenüberliegenden und in Vorwärtsrichtung erstreckenden Seiten eines Querachsabschnitts des Trägerelements angeordnet sind, wobei der Querachsabschnitt um eine sich in Vorwärtsrichtung erstreckende Längsachse des Trägerelements drehbar ist, wobei das Trägerelement um die dritte Achse drehbar ist, die sich zwischen zwei Paaren von Mittelrollen erstreckt. Diese Anordnung ermöglicht eine Schwenkbewegung der jeweiligen Mittelrollen eines Paares um die sich in Vorwärtsrichtung erstreckende Längsachse und weiterhin eine Schwenkbewegung der jeweiligen Paare um die dritte Achse, welche sich quer zu der Längsachse erstreckt, sodass ein optimaler Ausgleich der auf die Mittelrollen wirkenden Aufstandskräfte erreicht wird.

In einer vorteilhaften Weiterbildung kann die zweite Achse ausgehend von der ersten Achse in einem entgegen der Vorwärtsfahrtrichtung der landwirtschaftlichen Arbeitsmaschine befindlichen Bereich an dem Schwenkrahmen angeordnet sein, sodass eine Anordnung des Feder- und/oder Dämpfersystems in einem in Vorwärtsfahrtrichtung befindlichen Bereich des Schwenkrahmens möglich ist.

In einer vorteilhaften Ausgestaltung kann das Federsystem und/oder Dämpfersystem ausgehend von der ersten Achse in einem in Vorwärtsfahrtrichtung der landwirtschaftlichen Arbeitsmaschine befindlichen Bereich an dem Schwenkrahmen angeordnet sein. Hierdurch ist das Federsystem und/oder Dämpfersystem nahe der vorderen Umlenkrolle gelegen, sodass Stöße, welche durch etwaige Unebenheiten des Untergrunds auf die vordere Umlenkrolle wirken, besonders gut von dem Federsystem und/oder Dämpfersystem aufgenommen werden können.

In einer vorteilhaften Weiterbildung können das Triebrad, die vordere Umlenkrolle und die hintere Umlenkrolle derartig angeordnet sein, dass das Raupenband einen im Wesentlichen dreieckförmigen Verlauf aufweist. Dies ist eine vorteilhafte Form hinsichtlich des für das Raupenlaufwerk zur Verfügung stehenden Einbauraums.

In einer vorteilhaften Ausgestaltung kann das Triebrad drehbeweglich um eine vierte Achse gelagert sein, wobei die vierte Achse auf einer vertikalen Achse mit der ersten Achse und/oder der dritten Achse liegt. Dies ist besonders Vorteilhaft, da die Lastverteilung zwischen den jeweiligen Umlenkrollen und den jeweiligen Mittelrollen somit bei ebenen Untergrund ausgeglichen ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: zeigt eine schematische Seitenansicht eines erfindungsgemäßen Raupenlaufwerks,
- Figur 2: zeigt einen schematischen Ausschnitt des Raupenlaufwerks mit ersichtlicher Spanneinrichtung,
- Figur 3: zeigt eine Rückansicht des Raupenlaufwerks mit einer Antriebsachse zum Antreiben des Triebrads.

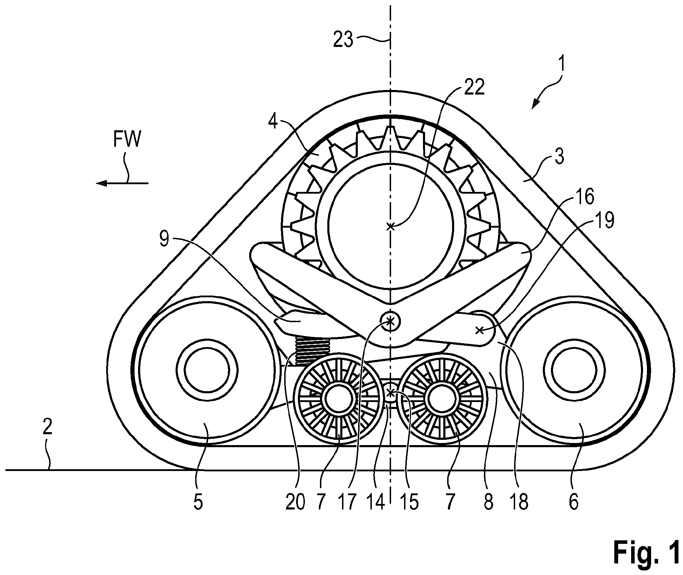

In. Fig. 1 ist ein Raupenlaufwerk 1 einer landwirtschaftlichen Arbeitsmaschine wie einem Traktor (nicht gezeigt) dargestellt. Eine Arbeitsmaschine im Sinne der Erfindung kann auch eine selbstfahrende Erntemaschine wie ein Mähdrescher oder ein Feldhäcksler sein.

Das Raupenlaufwerk 1 weist zur Abstützung der landwirtschaftlichen Arbeitsmaschine gegenüber dem Untergrund 2 ein elastisches Raupenband 3, beispielsweise aus Gummi, auf, welches endlos umläuft. Das Raupenband 3 wird dabei durch ein Triebrad 4 angetrieben, in eine Drehbewegung versetzt und läuft über eine vordere Umlenkrolle 5 und eine hintere Umlenkrolle 6, an welcher das Raupenband 3 umgelenkt und die Arbeitsmaschine gegenüber dem Untergrund 2 abgestützt wird. Weiterhin sind zwischen den Umlenkrollen 5, 6 zwei Mittelrollen 7 angeordnet, welche die Arbeitsmaschine zusätzlich gegenüber dem Untergrund 2 abstützen.

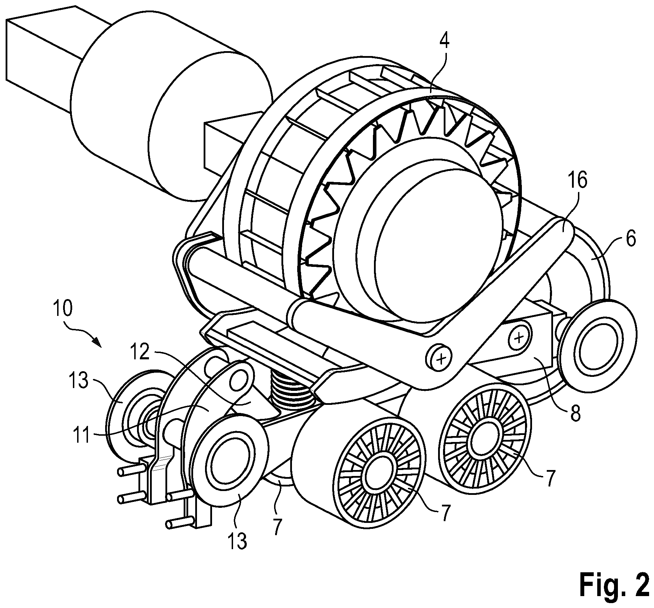

Ferner umfasst das Raupenlaufwerk 1 einen Raupenrahmen 8 und einen Schwenkrahmen 9. Die normale Vorwärtsfahrtrichtung ist in Figur 1 mit FW angedeutet. Der Raupenrahmen 8 erstreckt sich im Wesentlichen in Vorwärtsfahrtrichtung FW des Raupenlaufwerks 1. An einem vorderen Ende des Raupenrahmens 8 ist die vordere Umlenkrolle 5 mittels einer in Figur 2 ersichtlichen Spanneinrichtung 10 angeordnet. Hierbei weist die Spanneinrichtung 10 eine Bandspannschwinge 11 auf. Die Bandspannschwinge 11 ist schwenkbeweglich an dem Raupenrahmen 8 angeordnet. Zwischen dem Raupenrahmen 8 und der Bandspannschwinge 11 ist ein Aktor 12, welcher beispielsweise als hydraulische Zylindereinheit ausgebildet sein kann, zum Verschwenken der Bandspannschwinge 11 angeordnet. Weiterhin ist an der Bandspannschwinge 11 die vordere Umlenkrolle 5 drehbeweglich derartig gelagert, sodass diese mittels des Aktors 12 gegen das Raupenband 3 gepresst wird und das Raupenband 3 mit einer Spannkraft beaufschlagt. In der in Figur 2 abgebildeten Ausführungsform der Erfindung ist vorgesehen, dass zwei vordere Umlenkrollen 5 achsgleich an der Bandspannschwinge 11 angeordnet werden, wobei in Figur 2 lediglich die Radnaben 13 zur Befestigung der vorderen Umlenkrollen 5 dargestellt sind.

An dem hinteren Ende des Raupenrahmens 8 ist die hintere Umlenkrolle 6 fest angebaut und drehbeweglich gelagert. In einer alternativen Ausführungsform ist es denkbar die hintere Umlenkrolle 6 mittels einer Spanneinrichtung 10 am hinteren Ende des Raupenrahmens 8 anzuordnen, wobei die vordere Umlenkrolle 5 fest am vorderen Ende des Raupenrahmens 8 oder wie zuvor beschrieben ebenfalls mittels einer Spanneinrichtung 10 am vorderen Ende des Raupenrahmens 8 angeordnet sein kann. In der in Figur 2 dargestellten Ausführungsform ist ebenfalls vorgesehen, dass zwei hintere Umlenkrollen 6 achsgleich an dem hinteren Ende des Raupenrahmens 8 angeordnet werden.

Wie in Figur 1 dargestellt, ist zwischen der hinteren und der vorderen Umlenkrolle 5, 6 ein Trägerelement 14 fest und schwenkbeweglich um eine dritte Achse 15 an dem Raupenrahmen 8 gelagert. Im Ausführungsbeispiel ist das Trägerelement 14 rotationssymmetrisch zur dritten Achse 15 ausgebildet. An dem Trägerelement 14 sind zwei Mittelrollen 7 fest und drehbeweglich gelagert, welche die Arbeitsmaschine gegenüber dem Untergrund 2 abstützen. Hierbei ist eine der Mittelrollen 7 in einem sich ausgehend von der dritten Achse 15 in Vorwärtsfahrtrichtung FW befindlichen Bereich des Trägerelements 14 und die weitere dem Trägerelement 14 zugeordnete Mittelrolle 7 ausgehend von der dritten Achse 15 in einem sich entgegengesetzt zur Vorwärtsfahrtrichtung FW befindlichen Bereich an dem Trägerelement 14 angeordnet. Auf Grund dieser Anordnung weisen die Mittelrollen 7, welche das Raupenband 3 gegenüber dem Untergrund 2 abstützen, eine gegensinnige Bewegungsrichtung gegenüber dem Untergrund 2 auf. Das bedeutet, dass bei einer Aufwärtsbewegung einer der Mittelrollen 7 die weitere Mittelrolle 7 des Trägerelements 14 eine Abwärtsbewegung durchführt.

Im Ausführungsbeispiel weist das Raupenlaufwerk 1 zwei Trägerelemente 14 auf, die gegenüberliegend an dem Raupenrahmen 8 fest und schwenkbeweglich um die dritte Achse 15 gelagert sind und jeweils zwei drehbeweglich gelagerte Mittelrollen 7 haltern. Hierbei ist es vorgesehen, dass die zwei Trägerelemente 14 entkoppelt voneinander um die dritte Achse 15 schwenkbeweglich gelagert sind.

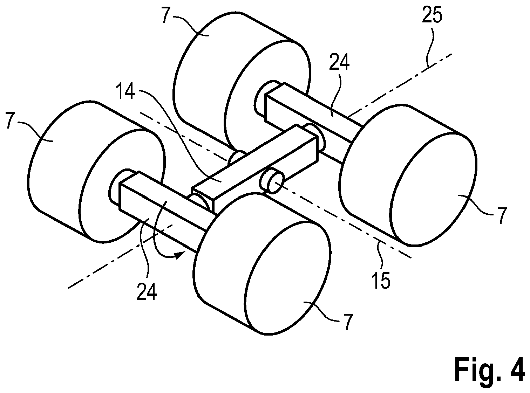

In einer in Figur 4 dargestellten alternativen Ausgestaltung sind sämtliche Mittelrollen 7 einem Trägerelement 14 zugeordnet. Das Trägerelement 14 ist um die dritte Achse 15 schwenkbeweglich an dem Raupenrahmen 8 angeordnet. In dieser alternativen Ausgestaltung weist das Trägerelement 14 an seinen äußeren Enden Querachsabschnitte 24 auf, welche um eine sich in Vorwärtsfahrtrichtung FW erstreckende Längsachse 25 des Trägerelements 14 drehbeweglich an dem Trägerelement 14 gelagert sind. Die Mittelrollen 7 sind paarweise einem der Querachsabschnitte 24 zugeordnet. Hierbei sind die Mittelrollen 7 eines Paares an sich gegenüberliegenden und in Vorwärtsrichtung FW erstreckenden Seiten des Querachsabschnitts 25 angeordnet. Die dritte Achse 15 erstreckt sich hierbei zwischen den Paaren.

Weiterhin zeigt Fig. 1 einen Tragrahmen 16, welcher ortsfest an der landwirtschaftlichen Arbeitsmaschine angeordnet ist. An dem Tragrahmen 16 ist das Raupenlaufwerk 1 mittels des Schwenkrahmens 9 schwenkbeweglich um eine erste Achse 17 an der Arbeitsmaschine angeordnet. Der Schwenkrahmen 9 erstreckt sich im Wesentlichen zwischen der vorderen und der hinteren Umlenkrolle 5, 6.

Der Raupenrahmen 8 weist in einem der hinteren Umlenkrolle 6 zugewandten Bereich obenseitig einen Vorsprung 18 auf. An diesem Vorsprung 18 ist der Raupenrahmen 8 fest und schwenkbeweglich um eine zweite Achse 19 an dem Schwenkrahmen 9 gelagert, wobei die zweite Achse 19 beabstandet zur ersten Achse 17 ist. Die zweite Achse 19 befindet sich ausgehend von der ersten Achse 17 in einem sich entgegengesetzt zur Vorwärtsfahrtrichtung FW des Raupenlaufwerks 1 befindlichen Bereich. Ausgehend von der ersten Achse 17 ist in einem in Vorwärtsfahrtrichtung FW befindlichen Bereich ein Federsystem 20, welches im Ausführungsbeispiel als Feder ausgebildet ist, zwischen dem Raupenrahmen 8 und dem Schwenkrahmen 9 angeordnet. Diese Anordnung ermöglicht es dem Raupenrahmen 8 eine Schwenkbewegung um die zweite Achse 19 auszuführen, wobei das Federsystem 20 die Schwenkbewegung des Raupenrahmens 8 um die zweite Achse 19 gegenüber dem Schwenkrahmen 9 federt. Zusätzlich oder alternativ zu dem Federsystem 20 liegt es im Rahmen der Erfindung ein Dämpfersystem (nicht gezeigt), beispielsweise in Form einer Kolbenzylindereinheit, zwischen dem Raupenrahmen 8 und dem Schwenkrahmen 9 anzuordnen, welches ebenfalls ausgehend von der ersten Achse 17 in einem sich entgegengesetzt zur Vorwärtsfahrtrichtung FW des Raupenlaufwerks 1 befindlichen Bereich positioniert ist und die Schwenkbewegung des Raupenrahmens 8 um die zweite Achse 19 gegenüber dem Schwenkrahmen 9 dämpft. In einer alternativen Ausgestaltung ist eine Anordnung der zweiten Achse 19 ausgehend von der ersten Achse 17 in einem sich in Vorwärtsfahrtrichtung FW befindlichen Bereich ebenfalls möglich, wobei das Federsystem 20 und/oder Dämpfersystem in einem ausgehend von der ersten Achse 17 sich entgegengesetzt zur Vorwärtsfahrtrichtrichtung FW befindlichen Bereich anzuordnen ist.

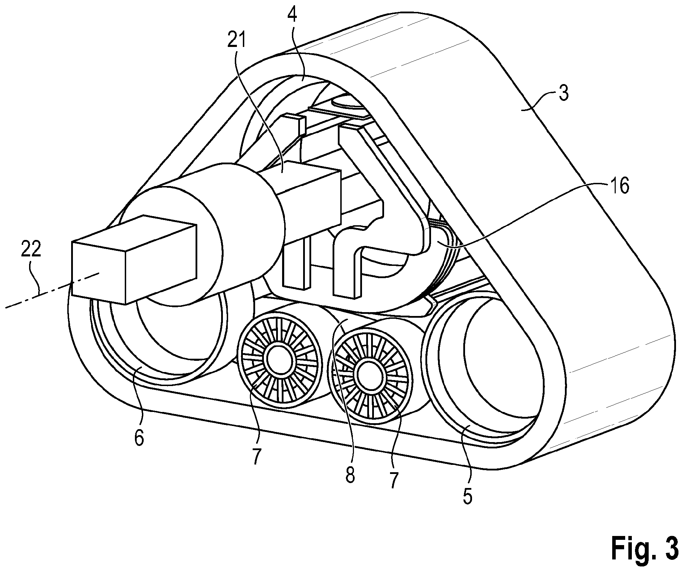

In Fig. 3 ist eine Antriebsachse 21 der Arbeitsmaschine dargestellt. Mittels der Antriebsachse 21 wird das Triebrad 4 angetrieben, wobei das Triebrad 4 wiederum das Raupenband 3 antreibt. Hierfür ist das Triebrad 4 separat zu dem Tragrahmen 16 und dem diesen zugeordneten Schwenkrahmen 9 sowie Raupenrahmen 8 an der Antriebsachse 16 drehbeweglich um eine vierte Achse 22 an der Arbeitsmaschine angeordnet. Die separate Anordnung ist besonders Vorteilhaft, da somit Anregungen, beispielsweise in Form von Stößen die durch einen unebenen Untergrund 2 auf die Umlenkrollen 5, 6 und Mittelrollen 7 wirken, nicht auf das Triebrad 4 übertragen werden. Aus diesem Grund sind keine zusätzlichen federnden und dämpfenden Elemente für die Anordnung des Triebrads 4 erforderlich. Das Triebrad 4 liegt zwischen der hinteren Umlenkrolle 6 und der vorderen Umlenkrolle 5 und ist drehbeweglich mit der vierten Achse 22 oberhalb dieser angeordnet. Hierdurch weist das Raupenlaufwerk die Form eines gleichschenkligen Dreiecks auf, welche besonders vorteilhaft für die Anordnung des Raupenlaufwerks 1 an einer landwirtschaftlichen Arbeitsmaschine, insbesondere einem Traktor, ist. Weiterhin liegt im Ruhezustand, beispielsweise wenn sich das Raupenlaufwerk 1 auf einem ebenen sowie sich horizontal erstreckenden Untergrund 2 befindet, die vierte Achse 22 auf einer vertikalen Achse 23 mit der ersten Achse 17 und der dritten Achse 15.

### Bezugszeichenliste:

- 1: Raupenlaufwerk
- 2: Untergrund
- 3: Raupenband
- 4: Triebrad
- 5: Vordere Umlenkrolle
- 6: Hintere Umlenkrolle
- 7: Mittelrolle
- 8: Raupenrahmen
- 9: Schwenkrahmen
- 10: Spanneinrichtung
- 11: Bandspannschwinge
- 12: Aktor
- 13: Radnabe
- 14: Trägerelement
- 15: Dritte Achse
- 16: Tragrahmen
- 17: Erste Achse
- 18: Vorsprung
- 19: Zweite Achse
- 20: Federsystem
- 21: Antriebsachse
- 22: Vierte Achse
- 23: Vertikale Achse
- 24: Querachsabschnitte
- 25: Längsachse

- FW: Vorwärtsfahrtrichtung

## Patentansprüche

1. Raupenlaufwerk (1) einer landwirtschaftlichen Arbeitsmaschine umfassend:
- ein Triebrad (4),
- eine vordere Umlenkrolle (5) und eine hintere Umlenkrolle (6),
- ein um das Triebrad (4) und die Umlenkrollen (5, 6) angeordnetes endloses Raupenband (3),
- eine Mehrzahl von zwischen der vorderen und hinteren Umlenkrolle (5, 6) befindlichen Mittelrollen (7),
wobei
das Raupenlaufwerk (1) einen Raupenrahmen (8) und einen Schwenkrahmen (9) aufweist,
wobei das Raupenlaufwerk (1) mittels des Schwenkrahmens (9) um eine erste Achse (17) schwenkbeweglich an der landwirtschaftlichen Arbeitsmaschine angeordnet ist und der Raupenrahmen (8) schwenkbeweglich um eine zweite Achse (19) an dem Schwenkrahmen (9) angeordnet ist,
wobei die zweite Achse (19) beabstandet zur ersten Achse (17) ist und zumindest ein Federsystem (20) und/oder ein Dämpfersystem zwischen dem Raupenrahmen (8) und dem Schwenkrahmen (9) angeordnet ist,
wobei die Umlenkrollen (5, 6) an dem Raupenrahmen (8) angeordnet sind,
**dadurch gekennzeichnet, dass**
die Mittelrollen (7) an einem gemeinsamen Trägerelement (14) angeordnet sind, wobei das gemeinsame Trägerelement (14) an dem Raupenrahmen (8) angeordnet ist.

2. Raupenlaufwerk (1) nach Anspruch 1, **dadurch gekennzeichnet, dass** das Trägerelement (14) schwenkbeweglich um eine dritte Achse (15) an dem Raupenrahmen (8) angeordnet ist.

3. Raupenlaufwerk (1) nach einem der Ansprüche 1 bis 2, **dadurch gekennzeichnet, dass** die vordere Umlenkrolle (5) und/oder hintere Umlenkrolle (6) mittels einer Spanneinrichtung (10) zur Spannung des Raupenbandes (3) an dem Raupenrahmen (8) angeordnet ist.

4. Raupenlaufwerk (1) nach einem der Ansprüche 1 bis 3, **dadurch gekennzeichnet, dass** zwei Mittelrollen (7) an dem Trägerelement (14) angeordnet sind, wobei eine der Mittelrollen (7) in einem sich ausgehend von der dritten Achse (15) in Vorwärtsfahrtrichtung (FW) befindlichen Bereich des Trägerelements (14) und die weitere Mittelrolle (7) ausgehend von der dritten Achse (15) in einem sich entgegengesetzt zur Vorwärtsfahrtrichtung (FW) befindlichen Bereich an dem Trägerelement (14) angeordnet ist.

5. Raupenlaufwerk (1) nach einem der Ansprüche 1 bis 4, **dadurch gekennzeichnet, dass** das Raupenlaufwerk (1) zwei Trägerelemente (14) mit jeweils zwei Mittelrollen (7) aufweist, wobei die zwei Trägerelemente (14) einander gegenüberliegend an dem Raupenrahmen (8) fest und drehbeweglich um die dritte Achse (15) angeordnet sind.

6. Raupenlaufwerk (1) nach Anspruch 5, **dadurch gekennzeichnet, dass** die zwei Trägerelemente (14) entkoppelt voneinander schwenkbeweglich um die dritte Achse (15) angeordnet sind.

7. Raupenlaufwerk (1) nach einem der Ansprüche 1 bis 3, **dadurch gekennzeichnet, dass** die Mittelrollen (7) paarweise angeordnet sind, wobei die jeweiligen Mittelrollen (7) eines Paares an sich gegenüberliegenden und in Vorwärtsrichtung (FW) erstreckenden Seiten eines Querachsabschnitts (24) des Trägerelements (14) angeordnet sind, wobei der Querachsabschnitt (24) um eine sich in Vorwärtsrichtung (FW) erstreckende Längsachse (25) des Trägerelements (14) drehbar ist, wobei das Trägerelement (14) um die dritte Achse (15) drehbar ist, die sich zwischen zwei Paaren von Mittelrollen (7) erstreckt.

8. Raupenlaufwerk (1) nach einem der Ansprüche 1 bis 7, **dadurch gekennzeichnet, dass** die zweite Achse (19) ausgehend von der ersten Achse (17) in einem entgegen der Vorwärtsfahrtrichtung (FW) der landwirtschaftlichen Arbeitsmaschine befindlichen Bereich an dem Schwenkrahmen (9) angeordnet ist.

9. Raupenlaufwerk (1) nach einem der Ansprüche 1 bis 8, **dadurch gekennzeichnet, dass** das Federsystem (20) und/oder Dämpfersystem ausgehend von der ersten Achse (17) in einem in Vorwärtsfahrtrichtung (FW) der landwirtschaftlichen Arbeitsmaschine befindlichen Bereich an dem Schwenkrahmen (9) angeordnet ist.

10. Raupenlaufwerk (1) nach einem der Ansprüche 1 bis 9, **dadurch gekennzeichnet, dass** das Triebrad (4), die vordere Umlenkrolle (5) und die hintere Umlenkrolle (6) derart angeordnet sind, dass das Raupenband (3) einen im Wesentlichen dreieckförmigen Verlauf aufweist.

11. Raupenlaufwerk (1) nach einem der Ansprüche 1 bis 10, **dadurch gekennzeichnet, dass** das Triebrad (4) drehbeweglich um eine vierte Achse (22) gelagert ist, wobei die vierte Achse (22) auf einer vertikalen Achse (23) mit der ersten Achse (17) und/oder der dritten Achse (15) liegt.

## Claims

1. A track roller unit (1) of an agricultural working machine comprising:
- a traction wheel (4),
- a front guide roller (5) and a rear guide roller (6),
- a continuous track belt (3) disposed around the traction wheel (4) and the guide rollers (5, 6),
- a plurality of middle rollers (7) located between the front and rear guide rollers (5, 6),
wherein
the track roller unit (1) has a track frame (8) and a swing frame (9),
wherein the track roller unit (1) is pivotably disposed on the agricultural working machine about a first axis (17) by means of the swing frame (9) and the track frame (8) is pivotably disposed on the swing frame (9) about a second axis (19),
wherein the second axis (19) is at a distance from the first axis (17) and at least one spring system (20) and/or damper system is disposed between the track frame (8) and the swing frame (9), wherein the guide rollers (5, 6) are disposed on the track frame (8),
**characterized in that**
the middle rollers (7) are disposed on a common support element (14), wherein the common support element (14) is disposed on the track frame (8).

2. The track roller unit (1) according to claim 1, **characterized in that** the support element (14) is pivotably disposed on the track frame (8) about a third axis (15).

3. The track roller unit (1) according to one of claims 1 to 2, **characterized in that** the front guide roller (5) and/or the rear guide roller (6) is disposed on the track frame (8) by means of a tensioning means (10) to tension the track belt (3) on the track frame (8).

4. The track roller unit (1) according to one of claims 1 to 3, **characterized in that** two middle rollers (7) are disposed on the support element (14), wherein one of the middle rollers (7) is disposed in a region of the support element (14) located in a forward direction of travel (FW) proceeding from the third axis (15), and the other middle roller (7) is disposed on the support element (14) in a region located opposite the forward direction of travel (FW) proceeding from the third axis (15).

5. The track roller unit (1) according to one of claims 1 to 4, **characterized in that** the track roller unit (1) has two support elements (14), each with two middle rollers (7), wherein the two support elements (14) are securely disposed opposite each other on the track frame (8) and pivotably disposed about the third axis (15).

6. The track roller unit (1) according to claim 5, **characterized in that** the two support elements (14) are pivotably disposed about the third axis (15) and decoupled from each other.

7. The track roller unit (1) according to one of claims 1 to 3, **characterized in that** the middle rollers (7) are disposed in pairs, wherein the respective middle rollers (7) of a pair are disposed on sides of a transverse axle section (24) of the support element (14) which extends opposite to each other and in the forward direction of travel (FW), wherein the transverse axle section (24) is rotatable about a longitudinal axis (25) of the support element (14) extending in the forward direction of travel (FW), wherein the support element (14) is rotatable about the third axis (15) which extends between two pairs of middle rollers (7).

8. The track roller unit (1) according to one of claims 1 to 7, **characterized in that** the second axis (19) is disposed on the swing frame (9) in a region opposite to the forward direction of travel (FW) of the agricultural working machine proceeding from the first axis (17).

9. The track roller unit (1) according to one of claims 1 to 8, **characterized in that** the spring system (20) and/or the damper system is disposed on the swing frame (9) in a region located in a forward direction of travel (FW) of the agricultural working machine proceeding from the first axis (17).

10. The track roller unit (1) according to one of claims 1 to 9, **characterized in that** the traction wheel (4), the front guide roller (5) and the rear guide roller (6) are disposed in a manner such that the track belt (3) has a substantially triangular profile.

11. The track roller unit (1) according to one of claims 1 to 10, **characterized in that** the traction wheel (4) is pivotably mounted about a fourth axis (22), wherein the fourth axis (22) lies on a vertical axis (22) with the first axis (17) and/or the third axis (15).

## Revendications

1. Train de roulement à chenilles (1) d'une machine de travail agricole, incluant :
- une roue motrice (4),
- un galet de renvoi avant (5) et un galet de renvoi arrière (6),
- une bande de chenille sans fin (3) disposée autour de la roue motrice (4) et des galets de renvoi (5, 6),
- une pluralité de galets intermédiaires (7) se trouvant entre les galets de renvoi avant et arrière (5, 6),
le train de roulement à chenilles (1) comportant un châssis de chenille (8) et un châssis pivotant (9),
le train de roulement à chenilles (1) étant disposé sur la machine de travail agricole avec une possibilité de pivotement autour d'un premier axe (17) au moyen du châssis pivotant (9), et le châssis de chenille (8) étant disposé sur le châssis pivotant (9) avec une possibilité de pivotement autour d'un deuxième axe (19),
le deuxième axe (19) étant à distance du premier axe (17) et un système de ressort (20) et/ou un système d'amortissement étant disposé entre le châssis de chenille (8) et le châssis pivotant (9),
les galets de renvoi (5, 6) étant disposés sur le châssis de chenille (8),
**caractérisé en ce que** les galets intermédiaires (7) sont disposés sur un élément porteur commun (14), l'élément porteur commun (14) étant disposé sur le châssis de chenille (8).

2. Train de roulement à chenilles (1) selon la revendication 1, **caractérisé en ce que** l'élément porteur (14) est disposé sur le châssis de chenille (8) avec une possibilité de pivotement autour d'un troisième axe (15).

3. Train de roulement à chenilles (1) selon une des revendications 1 à 2, **caractérisé en ce que** le galet de renvoi avant (5) et le galet de renvoi arrière (6) sont disposés sur le châssis de chenille (8) au moyen d'un équipement de tension (10) afin de tendre la bande de chenille (3).

4. Train de roulement à chenilles (1) selon une des revendications 1 à 3, **caractérisé en ce que** deux galets intermédiaires (7) sont disposés sur l'élément porteur (14), un des galets intermédiaires (7) étant disposé dans une zone de l'élément porteur (14) se trouvant dans le sens de marche avant (FW) à partir du troisième axe (15), et l'autre galet intermédiaire (7) étant disposé sur l'élément porteur (14) dans une zone se trouvant à l'opposé du sens de marche avant (FW) à partir du troisième axe (15).

5. Train de roulement à chenilles (1) selon une des revendications 1 à 4, **caractérisé en ce que** le train de roulement à chenilles (1) comporte deux éléments porteurs (14) avec respectivement deux galets intermédiaires (7), les deux éléments porteurs (14) étant disposés en vis-à-vis l'un de l'autre sur le châssis de chenille (8) de manière fixe et mobile en rotation autour du troisième axe (15).

6. Train de roulement à chenilles (1) selon la revendication 5, **caractérisé en ce que** les deux éléments porteurs (14) sont disposés avec une possibilité de pivotement autour du troisième axe (15) en étant découplés l'un de l'autre.

7. Train de roulement à chenilles (1) selon une des revendications 1 à 3, **caractérisé en ce que** les galets intermédiaires (7) sont disposés par paires, les galets intermédiaires respectifs (7) d'une paire étant disposés sur des côtés opposés, et s'étendant dans la direction avant (FW), d'une portion d'axe transversal (24) de l'élément porteur (14), la portion d'axe transversal (24) étant tournante autour d'un axe longitudinal (25) de l'élément porteur (14) s'étendant dans la direction avant (FW), l'élément porteur (14) étant tournant autour du troisième axe (15), lequel s'étend entre deux paires de galets intermédiaires (7).

8. Train de roulement à chenilles (1) selon une des revendications 1 à 7, **caractérisé en ce que** le deuxième axe (19) est disposé sur le châssis pivotant (9) dans une zone se trouvant à l'opposé du sens de marche avant FW de la machine de travail agricole à partir du premier axe (17).

9. Train de roulement à chenilles (1) selon une des revendications 1 à 8, **caractérisé en ce que** le système de ressort (20) et/ou le système d'amortissement est disposé sur le châssis pivotant (9) dans une zone se trouvant dans le sens de marche avant (FW) de la machine de travail agricole à partir du premier axe (17).

10. Train de roulement à chenilles (1) selon une des revendications 1 à 9, **caractérisé en ce que** la roue motrice (4), le galet de renvoi avant (5) et le galet de renvoi arrière (6) sont disposés de façon que la bande de chenille (3) présente un tracé sensiblement triangulaire.

11. Train de roulement à chenilles (1) selon une des revendications 1 à 10, **caractérisé en ce que** la roue motrice (4) est montée de façon mobile en rotation autour d'un quatrième axe (22), le quatrième axe (22) se trouvant sur un axe vertical (23) avec le premier axe (17) et/ou le troisième axe (15).
